# EUROPEAN PATENT APPLICATION

(11) **EP 3 249 174 A1**
(43) Date of publication of application: **29.11.2017**
(21) Application number: 17171901.6
(22) Date of filing: 19.05.2017
(51) Int. Cl.: F01D 17/02, F01D 21/00, F01D 25/00

(54) **ATTACHMENT SYSTEM FOR A GAS TURBINE ENGINE**

(30) Priority: 25.05.2016 US 201615163747
(71) Applicant: General Electric Company, Schenectady, NY 12345 (US)
(72) Inventor: SNIDER, Zachary John, Greenville, SC South Carolina 29615 (US); MARGOLIES, Joshua Lee, Schenectady, NY New York 12345 (US); SCHLEIF, Kurt Kramer, Greenville, NY New York 29615 (US)
(74) Representative: Lee, Brenda

(57) **Abstract**

The present disclosure is directed to a system (100, 100') for attaching an instrument lead (108) to a gas turbine engine component (102). The system (100, 100') includes a gas turbine engine component (102) that includes a surface (104). A first sleeve (110) couples to the surface (104) of the gas turbine engine component (102). The first sleeve (110) defines a first sleeve passageway (112) extending therethrough. An instrument lead (108) extends through the first sleeve passageway (112). A first potting material (126) couples the instrument lead (108) to the first sleeve (110) to prevent the instrument lead (108) from moving longitudinally relative to the first sleeve (110).

## Description

### FIELD OF THE TECHNOLOGY

The present disclosure generally relates to a gas turbine engine. More particularly, the present disclosure relates to an attachment system for a gas turbine engine.

### BACKGROUND

A gas turbine engine generally includes a compressor section, a combustion section, a turbine section, and an exhaust section. The compressor section progressively increases the pressure of a working fluid entering the gas turbine engine and supplies this compressed working fluid to the combustion section. The compressed working fluid and a fuel (e.g., natural gas) mix within the combustion section and burn in a combustion chamber to generate high pressure and high temperature combustion gases. The combustion gases flow from the combustion section into the turbine section where they expand to produce work. For example, expansion of the combustion gases in the turbine section may rotate a rotor shaft connected, e.g., to a generator to produce electricity. The combustion gases then exit the gas turbine via the exhaust section.

Generally, numerous instruments or other sensors collect data during the operation of the gas turbine engine. One or more processors may analyze the data collected by the instruments. In certain configurations, the one or more processors may be located remotely from the instruments collecting the data. In this respect, instrument leads (e.g., wires, tubes, etc.) couple each instrument to the corresponding processor to facilitate communication therebetween. Typically, the instrument leads are attached to or otherwise coupled to various components located between the instrument and the processor.

The instrument leads are typically attached to metallic components by tack welding metal straps thereto. In the case of ceramic components, however, the complex machining is required to form pockets that receive the instrument and/or instrument leads. These pockets must then be filled with a potting material. This, however, may reduce the strength of the ceramic component, thereby limiting the applications for which the ceramic material may be used. Alternately, the instrument leads may be adhesively coupled directly to the surface of the ceramic component. Since the instrument leads are typically metallic, the instrument lead and the ceramic component thermally expand and contract at different rates. This exerts stress on the adhesive coupling the instrument lead and the ceramic component, which may be undesirable.

### BRIEF DESCRIPTION OF THE TECHNOLOGY

Aspects and advantages of the technology will be set forth in part in the following description, or may be obvious from the description, or may be learned through practice of the technology.

In one aspect, the present disclosure is directed to a system for attaching an instrument lead to a gas turbine engine component. The system includes a gas turbine engine component that includes a surface. A first sleeve couples to the surface of the gas turbine engine component. The first sleeve defines a first sleeve passageway extending therethrough. An instrument lead extends through the first sleeve passageway. A first potting material couples the instrument lead to the first sleeve to prevent the instrument lead from moving longitudinally relative to the first sleeve.

Another aspect of the present disclosure is directed to a gas turbine engine that includes a compressor section, a combustion section, and a turbine section. A gas turbine engine component is positioned in the compressor section, the combustion section, or the turbine section. The gas turbine engine component includes a surface. A first sleeve couples to the surface of the gas turbine engine component. The first sleeve defines a first sleeve passageway extending therethrough. An instrument lead extends through the first sleeve passageway. A first potting material couples the instrument lead to the first sleeve to prevent the instrument lead from moving longitudinally relative to the first sleeve.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended FIGS., in which:
FIG. 1 is a schematic view of an exemplary gas turbine engine that may incorporate various embodiments disclosed herein;
FIG. 2 is a cross-sectional view of an exemplary turbine section that may be incorporated in the gas turbine engine shown in FIG. 1 and may incorporate various embodiments disclosed herein;
FIG. 3 is a top view of an attachment system for attaching an instrument lead to a gas turbine component that may be incorporated in the gas turbine engine shown in in FIG. 1 and incorporate various embodiment disclosed herein;
FIG. 4 is a front view of the attachment system shown in FIG. 3, further illustrating the features of the attachment system;
FIG. 5 is a cross-sectional view of the attachment system taken generally about line 5-5 in FIG. 3, illustrating a first sleeve with the gas turbine engine component removed for clarity;
FIG. 6 is a cross-sectional view of the attachment system taken generally about line 5-5 in FIG. 3, illustrating the first sleeve coupled to the gas turbine engine component;
FIG. 7 is a cross-sectional view of the attachment system taken generally about line 7-7 in FIG. 3, illustrating further the first sleeve coupled to the gas turbine engine component;
FIG. 8 is a top view of an alternate embodiment of the attachment system that may incorporate various embodiments disclosed herein;
FIG. 9 is a cross-sectional view of the attachment system taken generally about line 9-9 in FIG. 8, illustrating that the instrument lead is longitudinally moveable relative to the second sleeve;
FIG. 10 is a cross-sectional view of the attachment system taken generally about line 9-9 in FIG. 8, illustrating a second potting material that prevents relative longitudinal movement between the instrument lead and the second sleeve;
FIG. 11 is a cross-sectional view of the attachment system taken generally about line 11-11 in FIG. 8, illustrating that the instrument lead is longitudinally moveable relative to a third sleeve; and
FIG. 12 is a cross-sectional view of the attachment system taken generally about line 12-12 in FIG. 8, illustrating that the instrument lead is longitudinally moveable relative to a fourth sleeve.

Repeat use of reference characters in the present specification and drawings is intended to represent the same or analogous features or elements of the present technology.

### DETAILED DESCRIPTION OF THE TECHNOLOGY

Reference will now be made in detail to present embodiments of the technology, one or more examples of which are illustrated in the accompanying drawings. The detailed description uses numerical and letter designations to refer to features in the drawings. Like or similar designations in the drawings and description have been used to refer to like or similar parts of the technology. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid path. For example, "upstream" refers to the direction from which the fluid flows, and "downstream" refers to the direction to which the fluid flows.

Each example is provided by way of explanation of the technology, not limitation of the technology. In fact, it will be apparent to those skilled in the art that modifications and variations can be made in the present technology without departing from the scope or spirit thereof. For instance, features illustrated or described as part of one embodiment may be used on another embodiment to yield a still further embodiment. Thus, it is intended that the present technology covers such modifications and variations as come within the scope of the appended claims and their equivalents. Although an industrial or land-based gas turbine is shown and described herein, the present technology as shown and described herein is not limited to a land-based and/or industrial gas turbine unless otherwise specified in the claims. For example, the technology as described herein may be used in any type of turbine including, but not limited to, aviation gas turbines (e.g., turbofans, etc.), steam turbines, and marine gas turbines. In fact, the technology described herein may be used generally to bond metal instruments to ceramic components in application other than gas turbine engines (e.g., aircraft wings, etc.).

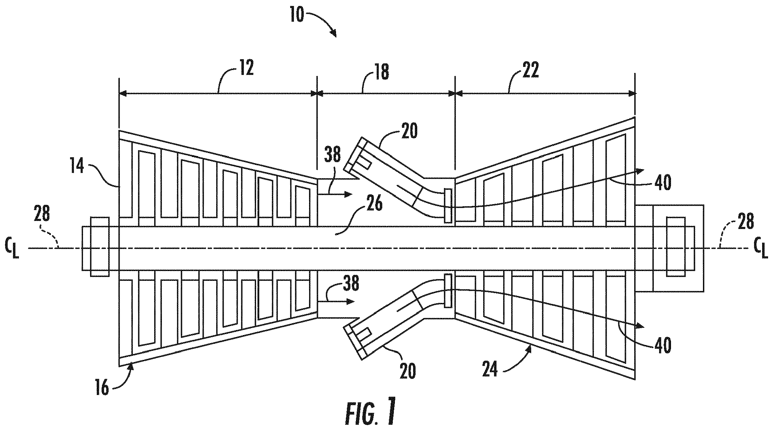

Referring now to the drawings, FIG. 1 is a schematic of an exemplary gas turbine engine 10 as may incorporate various embodiments disclosed herein. As shown, the gas turbine engine 10 generally includes a compressor section 12 having an inlet 14 disposed at an upstream end of a compressor 16. The gas turbine engine 10 also includes a combustion section 18 having one or more combustors 20 positioned downstream from the compressor 16. The gas turbine engine 10 further includes a turbine section 22 having a turbine 24 (e.g., an expansion turbine) disposed downstream from the combustion section 18. A rotor shaft 26 extending along an axial centerline 28 of the gas turbine engine 10 rotatably couples the compressor 16 and the turbine 24.

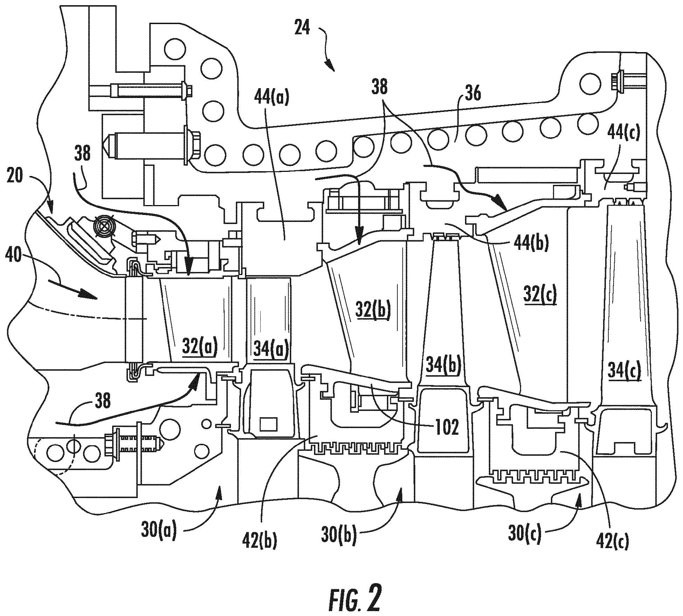

FIG. 2 is a cross-sectional side view of the turbine 24 that may incorporate various embodiments disclosed herein. As shown in FIG. 2, the turbine 24 may include multiple turbine stages. For example, the turbine 24 may include a first stage 30(a), a second stage 30(b), and a third stage 30(c). Although, the turbine 24 may include more or less turbine stages as is necessary or desired.

Each stage 30(a-c) includes, in serial flow order, a corresponding row of turbine nozzles 32(a), 32(b), and 32(c) and a corresponding row of turbine rotor blades 34(a), 34(b), and 34(c) axially spaced apart along the rotor shaft 26 (FIG. 1). Each of the rows of turbine nozzles 32(b-c) are respectively coupled to a corresponding diaphragm 42(b), 42(c). Although not shown in FIG. 2, the row of turbine nozzles 32(a) may also couple to a diaphragm. Each of the rows of turbine rotor blades 34(a-c) are respectively circumferentially enclosed by a corresponding turbine shroud 44(a), 44(b), 44(c). A casing or shell 36 circumferentially surrounds each stage 30(a-c) of the turbine nozzles 32(a-c) and the turbine rotor blades 34(a-c). The turbine nozzles 32(a-c) remain stationary relative to the turbine rotor blades 34(a-c) during operation of the gas turbine 10.

As illustrated in FIGS. 1 and 2, the compressor 16 provides compressed air 38 to the combustors 20. The compressed air 38 mixes with fuel (e.g., natural gas) in the combustors 20 and bums to create combustion gases 40, which flow into the turbine 24. The turbine nozzles 32(a-c) and turbine rotor blades 34(a-c) extract kinetic and/or thermal energy from the combustion gases 40. This energy extraction drives the rotor shaft 26. The combustion gases 40 then exit the turbine 24 and the gas turbine engine 10. A portion of the compressed air 38 may be used as a cooling medium for cooling the various components of the turbine 24, such as the turbine nozzles 32(a-c), the turbine rotor blades 34(a-c), and the diaphragms 42(b-c).

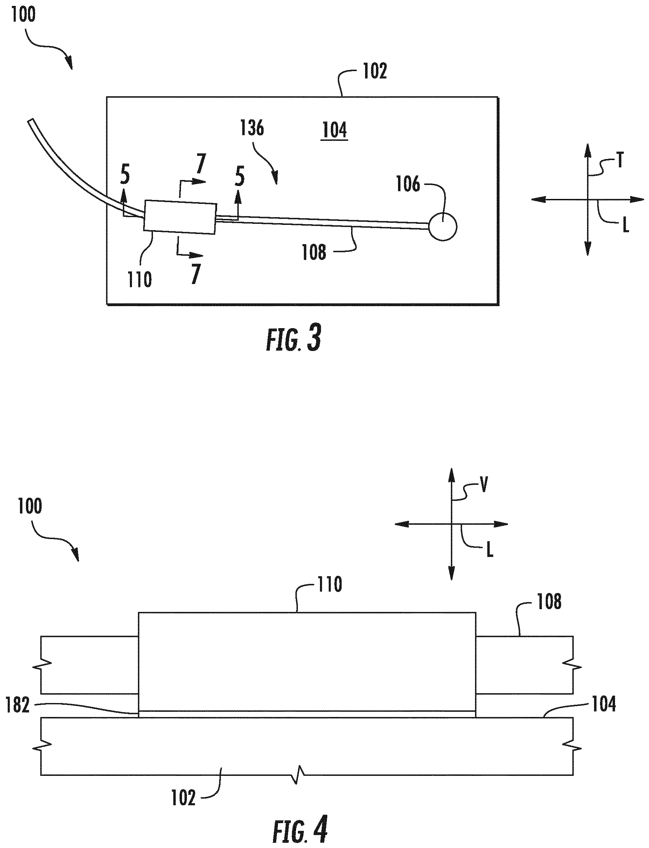

FIGS. 3-6 illustrate one embodiment of an attachment system 100 for attaching an instrument lead 108 to a surface 104 of a gas turbine engine component 102 in the gas turbine 10. As depicted therein, the attachment system 100 defines a longitudinal direction L, a transverse direction T orthogonal to the longitudinal direction L, and a vertical direction V orthogonal to the longitudinal direction L and the transverse direction T.

The gas turbine engine component 102 may be any component in the gas turbine engine 10 to which the instrument lead 108 need be connected. For example, the gas turbine engine component 102 may be one of the turbine nozzles 32(a-c), the turbine rotor blades 34(a-c), the diaphragms 42(b-c), or the turbine shrouds 44(a-c). In fact, the gas turbine engine component 102 may be any component in the turbine section 22. Furthermore, the gas turbine engine component 102 may be any component in the compressor section 12 (e.g., a compressor nozzle, compressor rotor, compressor shroud, etc.) or the combustion section 18 (e.g., a combustor frame) as well. Preferably, the gas turbine engine component 102 is formed from a ceramic material or a ceramic matrix composite ("CMC") material. Although, the gas turbine engine component 102 may be formed from other materials as well.

In the embodiment shown in FIG. 3, an instrument 106 is coupled to the surface 104 of the gas turbine engine component 102. The instrument 106 may be any suitable sensor or other device for collecting data from the environment in which it is situated. For example, the instrument 106 may be a pressure sensor, strain gauge, thermistor, thermocouple, microphone, optical sensor, or any other sensor that may be used in the gas turbine engine 10 to collect data therefrom. The instrument 106 may be coupled to the surface 104 in any suitable manner (e.g., adhesively, etc.). In alternate embodiments, the instrument 106 may be coupled to other surfaces of the gas turbine engine component 102 or coupled to another component in the gas turbine engine 10.

As illustrated in FIG. 3, the instrument lead 108 connects to the instrument 106. More specifically, the instrument lead 108 may provide power for the instrument 106 to operate, facilitate communication between the instrument 106 and a processor (not shown), or transmit any other medium necessary or desirable to the operation of the instrument 106. For example, the instrument lead 108 may be a wire that transmits electric current or voltage to power the instrument 106 or a ground completing a circuit that supplies the electric current or voltage to the instrument 106. The instrument lead 108 may also be a wire that transmits an electric signal containing data to (e.g., a reference voltage, etc.) or from (e.g., data collected by the instrument 106, etc.) the instrument 106. In other embodiments, the instrument lead 108 may be a tube or hose that supplies a vacuum or a pressure to the instrument 106. In further embodiments, the instrument lead 108 may be a fiber optic cable for transmitting an optical signal to or from the instrument 106.

As shown in FIGS. 3 and 4, the attachment system 100 also includes a first sleeve 110. More specifically, the first sleeve 110 is adhesively coupled to the surface 104 of the gas turbine component 102 with a first adhesive material 182. In particular embodiments, the first adhesive material 182 is a ceramic cement. In some embodiments, the first adhesive material 182 may be cured at elevated temperatures, under less than atmospheric pressure, or with a slow heat up rate to improve the density of the adhesive (i.e., reduce the porosity thereof). Nevertheless, the first adhesive material 182 may be any suitable adhesive and may be cured using any suitable curing process.

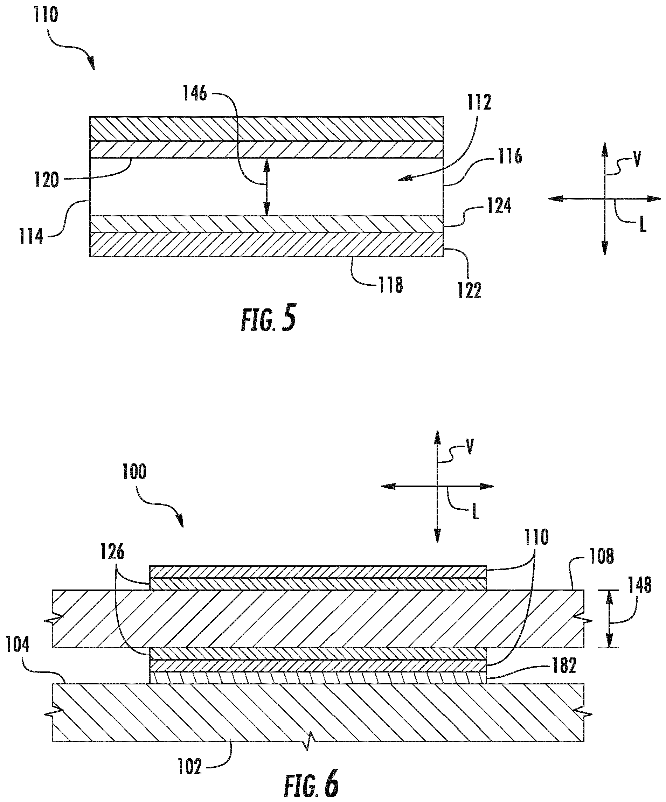

FIG. 5 illustrates the first sleeve 110 in greater detail. More specifically, the first sleeve 110 defines a first sleeve passageway 112 extending from a first end 114 to a second end 116. In this respect, the first sleeve 110 includes an outer surface 118 and an inner surface 120. A portion of the outer surface 118 is adhesively coupled to the surface 104 by the first adhesive material 182 as discussed in greater detail above. The inner surface 120 of the gas turbine component 102 defines the first sleeve passageway 112, which has a first sleeve passageway diameter 146.

In the embodiment shown in FIG. 5, the first sleeve 110 may include an outer portion 122 and an inner liner 124. In particular, the inner liner 124 is positioned within and circumferentially enclosed by the outer portion 122. The outer portion 122 is preferably formed from a ceramic material (e.g., silicon carbide), and the inner liner 124 is formed from a material chemically compatible with the instrument lead 108. For example, the inner liner 124 may be formed from alumina if the instrument lead 108 is a metallic wire. Alumina prevents the formation of silicides associated with contact between a metal (e.g., an instrument lead 108) and a ceramic (e.g., the outer portion 122). Nevertheless, the outer portion 122 and the inner liner 124 may be formed from any suitable material. The inner liner 124 may be formed by press injecting an inner liner material into the space between the outer portion 122 and the instrument lead 108. Alternately, the instrument lead 108 may be pre-coated with the inner liner material before inserting the instrument lead 108 into the outer portion 122. Although, any suitable method may be used to form the inner liner 124. Furthermore, the first sleeve 110 may include only the outer portion 122 (i.e., may be devoid of the inner liner 124) in other embodiments, such as the one shown in FIG. 6. In such embodiments, the instrument lead 108 may be sheathed in a protective braid (not shown) formed from, e.g., alumina.

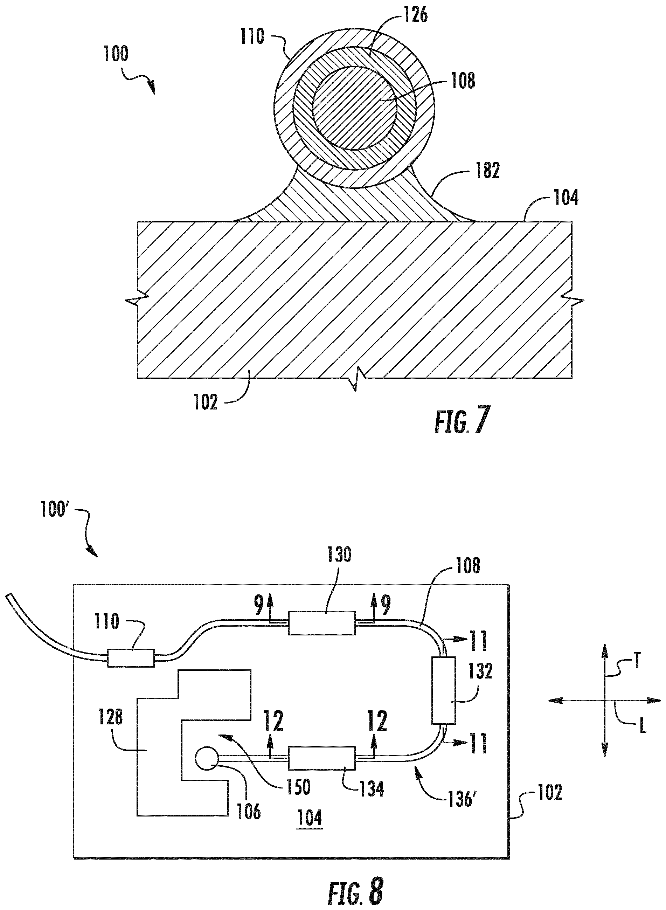

Referring now to FIGS. 6 and 7, the first sleeve 110 couples a portion of the instrument lead 108 to the surface 104 of the gas turbine component 102. As such, the first sleeve 110 defines an instrument lead path 136 (FIG. 3) for routing the instrument lead 108 on the surface 104 of the gas turbine engine component 102. As mentioned above, the first sleeve 110 is adhesively coupled to the gas turbine component 102 with the first adhesive material 182. The instrument lead 108 extends through the first sleeve passageway 112 defined by the first sleeve 110. In this respect, the first sleeve passageway diameter 146 (FIG. 5) is larger than the outer diameter 148 of the instrument lead 108 to provide clearance for portion of the instrument lead 108 positioned in the first sleeve passageway 112. The first sleeve 110 prevents the portion of the instrument lead 108 positioned in the first sleeve passageway 112 from moving in the transverse direction T or the vertical direction V relative to the first sleeve 110.

A first potting material 126 is positioned between the instrument lead 108 and the inner surface 120 of the first sleeve 110. In the embodiment shown in FIG. 6, the first potting material 126 occupies all of the space between the instrument lead 108 and the first sleeve 110 created by the difference in the first sleeve passageway diameter 146 and the outer diameter 148 of the instrument lead 108. Nevertheless, the first potting material 126 may occupy only a portion of the space between the instrument lead 108 and the inner surface 120 of the first sleeve 110. The first potting material 126 is an adhesive that couples the instrument lead 108 and the first sleeve 110. As such, the first potting material 126 may be applied to the instrument lead 108 as the instrument lead 108 is being fed through the first sleeve passageway 112. The first potting material 126 may be a ceramic adhesive. In some embodiments, the first potting material 126 may be the same adhesive as the adhesive coupling the first sleeve 110 to the gas turbine engine component 102. Nevertheless, the first potting material 126 may be a different adhesive than the adhesive coupling the first sleeve 110 to the gas turbine engine component 102 as well.

The first potting material 126 prevents relative longitudinal movement between the instrument lead 108 and the first sleeve 110. That is, the first potting material 126 prevents the instrument lead 108 from sliding in the first sleeve passageway 112 along the longitudinal direction L. In this respect, first potting material 126 provides strain relief to the instrument 106. More specifically, inadvertent pulling on the instrument lead 108 (e.g., during assembly of the gas turbine engine 10) may exert strain on the instrument 106. Since the first potting material 126 prevents the instrument lead 108 from moving longitudinally relative to the first sleeve 110, strain is not exerted on the instrument 106 if the instrument lead 108 is inadvertently pulled. That is, the portion of the instrument lead 108 between the first sleeve 110 and the instrument 106 does not move longitudinally when the end of the instrument lead 108 opposite of the instrument 106 is pulled.

As mentioned above, the gas turbine engine component 102, the first sleeve 110, and the first adhesive material 182 used to couple the first sleeve 110 to the gas turbine engine component 102 are preferably constructed from a ceramic or CMC material. In this respect, the gas turbine engine component 102, the first sleeve 110, and the first adhesive material 182 all have similar coefficients of thermal expansion and, accordingly, expand and contract at similar rates. In fact, the first sleeve 110 and the gas turbine engine component 102 may be formed from the same material and, thus, have the same coefficient of thermal expansion. As such, far less stress is exerted on the first adhesive material 182 coupling the first sleeve 110 to the gas turbine engine component 102 in the attachment system 100 than on the adhesive coupling the instrument lead 108 to the gas turbine engine component 102 using conventional attachment systems.

FIGS. 8-12 illustrate an alternate embodiment of the attachment system 100'. As with the attachment system 100, the attachment system 100' defines a longitudinal direction L, a transverse direction T orthogonal to the longitudinal direction L, and a vertical direction V orthogonal to the longitudinal direction L and the transverse direction T.

The gas turbine engine component 102 may include features that require a more complex instrument lead path than the instrument lead path 136 shown in FIG. 3. In the embodiment shown in FIG. 8, for example, the gas turbine engine component 102 includes a projection 128 extending vertically outwardly from the surface 104. The projection 128 encloses a portion 150 of the surface 104 where the instrument 106 is coupled to the gas turbine engine component 102. As such, it is necessary to route the instrument lead 108 along an instrument lead path 136' having a hook-shape. In other embodiments, the gas turbine engine component 102 may have other features or instrument lead path shapes.

The attachment system 100' includes multiple sleeves to route the instrument lead 108 along the instrument lead path 136'. In the embodiment shown in FIG. 8, the attachment system 100' includes the first sleeve 110, a second sleeve 130, a third sleeve 132, and a fourth sleeve 134. In other embodiments, the attachment system 100' may include more or less sleeves as is desired or necessary.

The first, the second, the third, and the fourth sleeves 110, 130, 132, 134 couple portions of the instrument lead 108 to the surface 104 of the gas turbine engine component 102, thereby routing the instrument lead 108 along the instrument lead path 136'. In particular, the first sleeve 110 is positioned along the instrument lead path 136' furthest from the instrument 106. The second sleeve 130 is positioned along the instrument lead path 136' between first sleeve 110 and the instrument 106. The third sleeve 132 is positioned along the instrument lead path 136' between second sleeve 130 and the instrument 106. The fourth sleeve 134 is positioned along the instrument lead path 136' between the third sleeve 132 and the instrument 106. The shape and/or configuration of the instrument lead path 136' may be changed by adjusting the positioning of the first, the second, the third, and/or the fourth sleeves 110, 130, 132, 134 on the surface 104 of the gas turbine engine component 102.

The first sleeve 110 in the attachment system 100' is substantially identical to the first sleeve 110 in the attachment system 100 discussed above. As mentioned above, the first adhesive material 182 couples the first sleeve 110 to the surface 104 of the gas turbine engine component 102. Furthermore, the first potting material 126 couples the instrument lead 108 and the first sleeve 110 in the attachment system 100' as well.

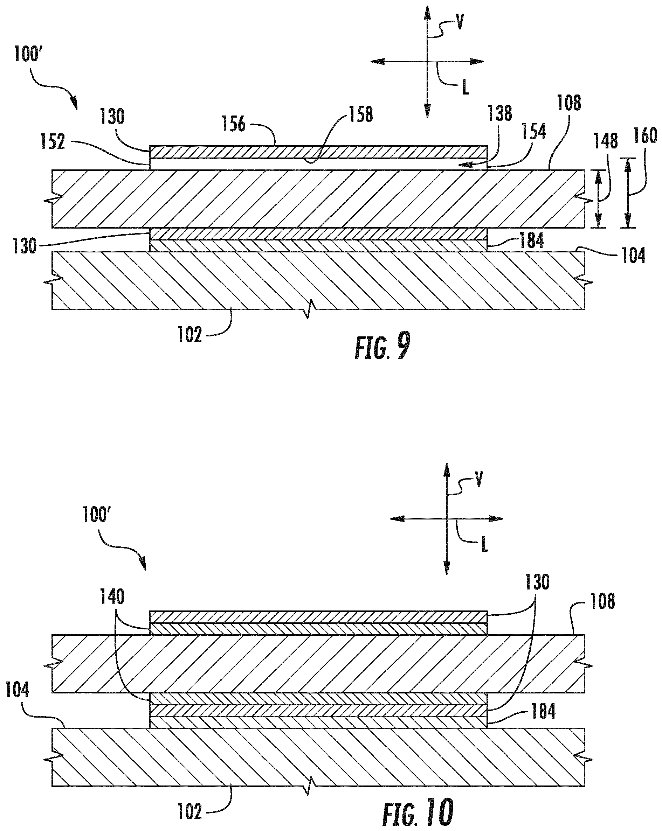

FIGS. 9 and 10 illustrate the second sleeve 130 in greater detail. More specifically, the second sleeve 130 includes an outer surface 156 and an inner surface 158. A portion of the outer surface 156 is adhesively coupled (e.g., via a ceramic adhesive) to the surface 104 of the gas turbine engine component 102 with a second adhesive material 184. The inner surface 158 of the second sleeve 130 defines a second sleeve passageway 138 extending from a first end 152 to a second end 154. The instrument lead 108 extends through the second sleeve passageway 138. As such, the second sleeve 130 couples a portion of the instrument lead 108 to the surface 104 of the gas turbine component 102. In this respect, the second sleeve 130 prevents the portion of the instrument lead 108 positioned in the second sleeve passageway 138 from moving in the transverse direction T or the vertical direction V relative to the second sleeve 130. The second sleeve 130 and the second adhesive material 184 are preferably formed from a ceramic material. The second adhesive material 184 may be the same as or different than the first adhesive material 182. Nevertheless, the second sleeve 130 and the second adhesive material 184 may be formed from other suitable materials as well. The second sleeve 130 may optionally include an inner sleeve (not shown) similar to the inner liner 124.

In the embodiment shown in FIG. 9, the instrument lead 108 may move longitudinally relative to the second sleeve 130. More specifically, the second sleeve passageway 138 includes a diameter 160 larger than the outer diameter 148 of the instrument lead 108. Since the embodiment shown in FIG. 9 does not include any potting material to couple the instrument lead 108 to the inner surface 158 of the second sleeve 130, the instrument lead 108 may slide in the second sleeve passageway 138 in the longitudinal direction L. In this respect, the embodiment of the second sleeve 130 shown in FIG. 9 does not provide strain relief to the instrument 106. Instead, the second sleeve 130 merely routes the instrument lead 108 along the instrument lead path 136'. That is, the second sleeve 130 constrains the instrument lead 108 in the transverse direction T and the vertical direction V, while permitting relative movement between the instrument lead 108 and the second sleeve 130 in the longitudinal direction L.

In the embodiment shown in FIG. 10, however, a second potting material 140 is positioned between the instrument lead 108 and the inner surface 158 of the second sleeve 130. The second potting material 140 occupies all of the space between the instrument lead 108 and the second sleeve 130 created by the difference in the second sleeve passageway diameter 160 and the outer diameter 148 of the instrument lead 108 in the embodiment shown in FIG. 10. Nevertheless, the second potting material 140 may occupy only a portion of the space between the instrument lead 108 and the inner surface 158 of the second sleeve 130. The second potting material 140 is an adhesive (e.g., a ceramic adhesive) that couples the instrument lead 108 and the second sleeve 130. The second potting material 140 may be the same or different than the first potting material 126. The second potting material 140 operates in the same manner as the first potting material 126 to prevent the instrument lead 108 from sliding in the second sleeve passageway 138 along the longitudinal direction L. In this respect, the second potting material 140 provides strain relief to the instrument 106.

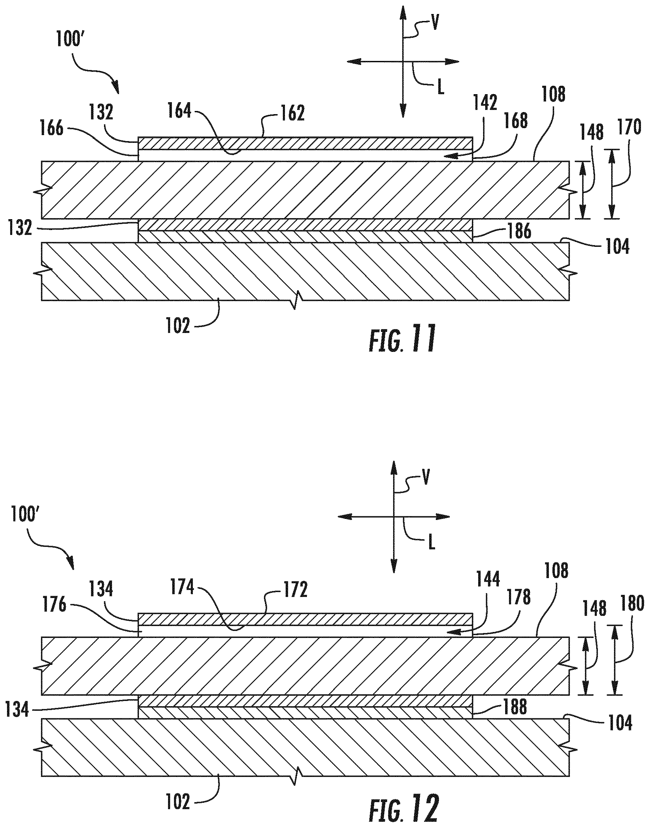

FIG. 11 illustrates the third sleeve 132 in greater detail. More specifically, the third sleeve 132 includes an outer surface 162 and an inner surface 164. A portion of the outer surface 162 is adhesively coupled (e.g., via a ceramic adhesive) to the surface 104 of the gas turbine engine component 102 with a third adhesive material 186. The inner surface 164 of the third sleeve 132 defines a third sleeve passageway 142 extending from a first end 166 to a second end 168. The instrument lead 108 extends through the third sleeve passageway 142. As such, the third sleeve 132 couples a portion of the instrument lead 108 to the surface 104 of the gas turbine component 102. In this respect, the third sleeve 132 prevents the portion of the instrument lead 108 positioned in the third sleeve passageway 132 from moving in the transverse direction T or the vertical direction V relative to the third sleeve 132. The third sleeve 132 and the third adhesive material 186 are preferably formed from a ceramic material. The third adhesive material 186 may be the same as or different than the first and the second adhesive materials 182, 184. Nevertheless, the third sleeve 132 and the third adhesive material 186 may be formed from other suitable materials as well. The third sleeve 132 may optionally include an inner sleeve (not shown) similar to the inner liner 124.

In the embodiment shown in FIG. 11, the instrument lead 108 may move longitudinally relative to the third sleeve 132. More specifically, the third sleeve passageway 142 includes a diameter 170 larger than the outer diameter 148 of the instrument lead 108. Since the embodiment shown in FIG. 11 does not include any potting material to couple the instrument lead 108 to the inner surface 164 of the third sleeve 132, the instrument lead 108 may slide in the third sleeve passageway 142 in the longitudinal direction L. In this respect, the embodiment of the third sleeve 132 shown in FIG. 11 does not provide strain relief to the instrument 106. Instead, the third sleeve 132 merely routes the instrument lead 108 along the instrument lead path 136'.

FIG. 12 illustrates the fourth sleeve 134 in greater detail. More specifically, the fourth sleeve 134 includes an outer surface 172 and an inner surface 174. A portion of the outer surface 172 is adhesively coupled (e.g., via a ceramic adhesive) to the surface 104 of the gas turbine engine component 102 with a fourth adhesive material 188. The inner surface 174 of the fourth sleeve 134 defines a fourth sleeve passageway 144 extending from a first end 176 to a second end 178. The instrument lead 108 extends through the fourth sleeve passageway 144. As such, the fourth sleeve 134 couples a portion of the instrument lead 108 to the surface 104 of the gas turbine component 102. In this respect, the fourth sleeve 134 prevents the portion of the instrument lead 108 positioned in the fourth sleeve passageway 134 from moving in the transverse direction T or the vertical direction V relative to the fourth sleeve 134. The fourth sleeve 134 and fourth adhesive material 188 are preferably formed from a ceramic material. The fourth adhesive material 188 may be the same as or different than the first, the second, and the third adhesive materials 182, 184, 186. Nevertheless, the fourth sleeve 134 fourth adhesive material 188 may be formed from other suitable materials as well.

In the embodiment shown in FIG. 12, the instrument lead 108 may move longitudinally relative to the fourth sleeve 134. More specifically, the fourth sleeve passageway 144 includes a diameter 180 larger than the outer diameter 148 of the instrument lead 108. Since the embodiment shown in FIG. 12 does not include any potting material to couple the instrument lead 108 to the inner surface 174 of the fourth sleeve 134, the instrument lead 108 may slide in the fourth sleeve passageway 144 in the longitudinal direction L. In this respect, the embodiment of the fourth sleeve 134 shown in FIG. 12 does not provide strain relief to the instrument 106. Instead, the fourth sleeve 134 merely routes the instrument lead 108 along the instrument lead path 136'.

As discussed in greater detail above, the instrument lead 108 may move longitudinally in the third and the fourth sleeve passageways 142, 144 in the embodiments shown in FIGS. 11 and 12. In other embodiments, however, potting material (not shown) may couple the instrument lead 108 to the third and/or the fourth sleeves 132, 134 to prevent longitudinal movement of the instrument lead 108 in the third and/or the fourth sleeve passageways 142, 144. In this respect, potting material may prevent longitudinal movement between the instrument lead 108 and all of or some of the second, the third, and the fourth sleeves 130, 132, 134. Nevertheless, the instrument lead 108 may be longitudinally moveable relative to all of the second, the third, and the fourth sleeves 130, 132, 134 in other embodiments. In fact, the instrument lead 108 need only be coupled to the first sleeve 110 by the first potting material 126 in the attachment system 100'.

This written description uses examples to disclose the technology, and also to enable any person skilled in the art to practice the technology, including making and using any devices or systems and performing any incorporated methods. The patentable scope of the technology is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A system for attaching an instrument lead to a gas turbine engine component, the system comprising:
   a gas turbine engine component comprising a surface;
   a first sleeve coupled to the surface of the gas turbine engine component, the first sleeve defining a first sleeve passageway extending therethrough;
   an instrument lead extending through the first sleeve passageway; and
   a first potting material coupling the instrument lead to the first sleeve to prevent the instrument lead from moving longitudinally relative to the first sleeve.
2. The system of clause 1, further comprising:
   a second sleeve coupled to the surface of the gas turbine engine component, the second sleeve defining a second sleeve passageway extending therethrough, wherein the instrument lead extends through the second sleeve passageway.
3. The system of any preceding clause, further comprising:
   an instrument coupled to the instrument lead;
   wherein the instrument lead defines an instrument lead path and the second sleeve is positioned along the instrument lead path between the first sleeve and the instrument.
4. The system of any preceding clause, further comprising:
   a second potting material coupling the instrument lead to the second sleeve to prevent the instrument lead from moving longitudinally relative to the second sleeve.
5. The system of any preceding clause, wherein the instrument lead is longitudinally moveable relative to the second sleeve.
6. The system of any preceding clause, further comprising:
   a third sleeve coupled to the surface of the gas turbine engine component, the third sleeve defining a third sleeve passageway extending therethrough, wherein the instrument lead extends through the third sleeve passageway and is longitudinally moveable relative to the third sleeve, and wherein the third sleeve is positioned along the instrument lead path between the second sleeve and the instrument.
7. The system of any preceding clause, wherein the first sleeve comprises an inner liner.
8. The system of any preceding clause, wherein the gas turbine engine component and the first sleeve are constructed from the same material.
9. The system of any preceding clause, wherein the gas turbine engine component and the first sleeve are constructed from a ceramic material.
10. The system of any preceding clause, wherein the gas turbine engine component is constructed from a ceramic matrix composite and the first sleeve is constructed from a ceramic material.
11. The system of any preceding clause, wherein the first sleeve is adhesively coupled to the surface of the gas turbine engine component.
12. The system of any preceding clause, wherein the first sleeve is adhesively coupled to the surface of the gas turbine engine component with a ceramic adhesive.
13. The system of any preceding clause, wherein the first potting material is a ceramic adhesive.
14. A gas turbine engine, comprising:
   a compressor section;
   a combustion section;
   a turbine section;
   a gas turbine engine component positioned in the compressor section, the combustion section, or the turbine section, the gas turbine engine component comprising a surface;
   a first sleeve coupled to the surface of the gas turbine engine component, the first sleeve defining a first sleeve passageway extending therethrough;
   an instrument lead extending through the first sleeve passageway; and
   a first potting material coupling the instrument lead to the first sleeve to prevent the instrument lead from moving longitudinally relative to the first sleeve.
15. The gas turbine engine of any preceding clause, further comprising:
   a second sleeve coupled to the surface of the gas turbine engine component, the second sleeve defining a second sleeve passageway extending therethrough, wherein the instrument lead extends through the second sleeve passageway.
16. The gas turbine engine of any preceding clause, further comprising:
   an instrument coupled to the instrument lead;
   wherein the instrument lead defines an instrument lead path and the second sleeve is positioned along the instrument lead path between the first sleeve and the instrument.
17. The gas turbine engine of any preceding clause, wherein the instrument lead is longitudinally moveable relative to the second sleeve.
18. The gas turbine engine of any preceding clause, wherein the gas turbine engine component and the first sleeve are constructed from the same material.
19. The gas turbine engine of any preceding clause, wherein the gas turbine engine component and the first sleeve are constructed from a ceramic material.
20. The gas turbine engine of any preceding clause, wherein the first sleeve is adhesively coupled to the surface of the gas turbine engine component with a ceramic adhesive, and wherein the first potting material is a ceramic material.

## Claims

1. A system (100, 100') for attaching an instrument lead (108) to a gas turbine engine component (102), the system (100, 100') comprising:
a gas turbine engine component (102) comprising a surface (104);
a first sleeve (110) coupled to the surface (104) of the gas turbine engine component (102), the first sleeve (110) defining a first sleeve passageway (112) extending therethrough;
an instrument lead (108) extending through the first sleeve passageway (112); and
a first potting material (126) coupling the instrument lead (108) to the first sleeve (110) to prevent the instrument lead (108) from moving longitudinally relative to the first sleeve (110).

2. The system (100, 100') of claim 1, further comprising:
a second sleeve (130) coupled to the surface (104) of the gas turbine engine component (102), the second sleeve (130) defining a second sleeve passageway (138) extending therethrough, wherein the instrument lead (108) extends through the second sleeve passageway (138).

3. The system (100, 100') of claim 2, further comprising:
an instrument (106) coupled to the instrument lead (108);
wherein the instrument lead (108) defines an instrument lead path (136, 136') and the second sleeve (130) is positioned along the instrument lead path (136, 136') between the first sleeve (110) and the instrument (106).

4. The system (100, 100') of claim 3, further comprising:
a second potting material (140) coupling the instrument lead (108) to the second sleeve (130) to prevent the instrument lead (108) from moving longitudinally relative to the second sleeve (130).

5. The system (100, 100') of claim 3, wherein the instrument lead (108) is longitudinally moveable relative to the second sleeve (130).

6. The system (100, 100') of claim 5, further comprising:
a third sleeve (132) coupled to the surface (104) of the gas turbine engine component (102), the third sleeve (132) defining a third sleeve passageway (142) extending therethrough, wherein the instrument lead (108) extends through the third sleeve passageway (142) and is longitudinally moveable relative to the third sleeve (132), and wherein the third sleeve (132) is positioned along the instrument lead path (136, 136') between the second sleeve (130) and the instrument (106).

7. The system (100, 100') of any preceding claim, wherein the first sleeve (110) comprises an inner liner (124).

8. The system (100, 100') of any preceding claim, wherein the gas turbine engine component (102) and the first sleeve (110) are constructed from a ceramic material.

9. The system (100, 100') of any of claims 1 to 7, wherein the gas turbine engine component (102) is constructed from a ceramic matrix composite and the first sleeve (110) is constructed from a ceramic material.

10. The system (100, 100') of any preceding claim, wherein the first sleeve (110) is adhesively coupled to the surface (104) of the gas turbine engine component (102).

11. The system (100, 100') of any preceding claim, wherein the first sleeve (110) is adhesively coupled to the surface (104) of the gas turbine engine component (102) with a ceramic adhesive.

12. The system (100, 100') of any preceding claim, wherein the first potting material (126) is a ceramic adhesive.

13. A gas turbine engine (10), comprising:
a compressor section (12);
a combustion section (18);
a turbine section (22);
a gas turbine engine component (102) positioned in the compressor section (12), the combustion section (18), or the turbine section (22), the gas turbine engine component (102) comprising a surface (104);
a first sleeve (110) coupled to the surface (104) of the gas turbine engine component (102), the first sleeve (110) defining a first sleeve passageway (112) extending therethrough;
an instrument lead (108) extending through the first sleeve passageway (112); and
a first potting material (126) coupling the instrument lead (108) to the first sleeve (110) to prevent the instrument lead (108) from moving longitudinally relative to the first sleeve (110).

14. The gas turbine engine (10) of claim 13, further comprising:
a second sleeve (130) adhesively coupled to the surface (104) of the gas turbine engine component (102), the second sleeve (130) defining a second sleeve passageway (138) extending therethrough, wherein the instrument lead (108) extends through the second sleeve passageway (138).

15. The gas turbine engine (10) of claim 14, further comprising:
an instrument (106) coupled to the instrument lead (108);
wherein the instrument lead (108) defines an instrument lead path (136, 136') and the second sleeve (130) is positioned along the instrument lead path (136, 136') between the first sleeve (110) and the instrument (106).
